# EUROPÄISCHE PATENTSCHRIFT

(11) **EP 1 671 692 B1**
(45) Veröffentlichungstag und Bekanntmachung des Hinweises auf die Patenterteilung: **21.08.2013**
(21) Anmeldenummer: 05111717.4
(22) Anmeldetag: 06.12.2005
(51) Int. Cl.: B01D 27/10, B01D 35/153, B01D 29/96, F01M 11/00

(54) **Flüssigkeitswechselfilter mit Rücklaufsperrventil**
Fluid filter with anti-return valve
Filtre à liquide avec clapet anti-retour

(30) Priorität: 16.12.2004 DE 102004061109
(43) Veröffentlichungstag der Anmeldung: 21.06.2006
(73) Patentinhaber: Mann + Hummel GmbH, 71638 Ludwigsburg (DE)
(72) Erfinder: Kolczyk, Markus, 74395 Mundelsheim (DE); Schreckenberger, Dieter, 71672 Marbach (DE); Luka, Helmut, 71672 Marbach (DE); Loos, Rainer, 71691 Freiberg (DE)

(56) Entgegenhaltungen:
- EP-A- 0 362 554
- WO-A-2004/053304
- GB-A- 2 208 068
- US-A- 4 052 307
- US-A- 5 362 390
- US-B1- 6 391 193

## Beschreibung

### Stand der Technik

Die Erfindung betrifft einen Flüssigkeitswechselfilter, insbesondere für das Schmieröl einer Brennkraftmaschine, nach dem Oberbegriff der Ansprüche 1 und 2.

Im Stand der Technik bekannte Flüssigkeitswechselfilter, auch Spin-on Filter genannt, weisen im Allgemeinen ein topfförmiges Gehäuse mit einer Abschlussplatte und einer die Abschlussplatte haltenden Deckelplatte auf. Die Flüssigkeitszufuhr erfolgt durch Öffnungen in der Abschlussplatte, welche um eine konzentrisch angeordnete Abflussöffnung angeordnet sind. Zwischen Zufluss und Abfluss ist dichtend ein hohlzylindrisches Filterelement angeordnet und Zufluss und Abfluss weisen jeweils eine Rücklaufsperre auf. An den Zuflussöffnungen ist dabei eine Rücklaufsperrmembran angeordnet und im Inneren des hohlzylindrischen Filterelementes ist ein Rücklaufsperrventil angeordnet. Dadurch wird ein Leerlaufen des Filterelementes bei stehender Brennkraftmaschine verhindert.

Nachteilig bei dem bekannten Stand der Technik ist, dass bei Flüssigkeitswechselfiltern, welche nicht hängend angeordnet sind, bei der Montage des Flüssigkeitswechselfilters zu Wartungszwecken die Flüssigkeit, welche sich oberhalb des Rücklaufsperrventils befindet, sowie die Flüssigkeit, welche sich in der nutförmigen Zuführung des Zylinderkopfes befindet, herausläuft und so den Motorraum bzw. die Umwelt verschmutzt.

Aus der US 4,052,307 ist ein Filterelement zu entnehmen, für die Filtrierung des Schmieröls einer Brennkraftmaschine. Dieses Filterelement besitzt einen Bajonettverschluss und kann an eine Adapterplatte angekoppelt werden. Die Abdichtung an der Adapterplatte erfolgt über geeignete Dichtelemente.

Es ist ferner aus der EP 0362554B1 ein Doppelfilter für Öl für Verbrennungsmotoren von Motorfahrzeugen bekannt, mit einem zylindrischen Gehäuse, einer Grobfilterkartusche und einer Feinfilterkartusche, beide sind in Form eines Zylinders über einem Rohr angeordnet, das vom Deckel dieses Gehäuses ausgehend in die Grobfilterkartusche hineinreicht. Der Deckel selbst ist mit einer Vielzahl von Einlassöffnungen für das zu filtrierende Öl und einer Auslassöffnung versehen. Auch hier erfolgt eine Abdichtung zwischen der Kartusche und einem Anschlusselement über entsprechende Einlegedichtungen.

Aus der US 5,362,390 ist ein Spin-on Filter mit einen konzentrischen Abflussventil und einer ringförmigen Membrandichtung zum Verschließen von Zuflussöffnungen bekannt.

Die Aufgabe der Erfindung ist es, einen Flüssigkeitswechselfilter bereitzustellen, bei dessen Wechsel die freiwerdende Ölmenge reduziert ist.

Diese Aufgabe wird, ausgehend vom Oberbegriff des unabhängigen Anspruchs, durch dessen kennzeichnende Merkmale gelöst.

Eine alternative Ausgestaltung beschreibt Anspruch 2.

### Vorteile der Erfindung

Die Erfindung betrifft einen Flüssigkeitswechselfilter, insbesondere für das Schmieröl einer Brennkraftmaschine, welcher ein im Wesentlichen topfförmiges Gehäuse mit einer konzentrisch angeordneten Abflussöffnung für die gereinigte Flüssigkeit und wenigstens eine Zuflussöffnung für die zu reinigende Flüssigkeit aufweist. Zwischen Zuflussöffnung und Abflussöffnung ist dichtend ein bevorzugt hohlzylindrisches, zick-zack-förmig gefaltetes Filterelement angeordnet. Das Gehäuse wird abschließend mit einer Deckelplatte geschlossen und die Deckelplatte ist dabei mit einer Abschlussplatte verbunden. Bevorzugt werden Gehäuse und Deckelplatte über eine Bördelung im Außenbereich der Deckelplatte miteinander verbunden und die Abschlussplatte ist ebenfalls über ein formschlüssiges Verbindungsverfahren mit der Deckelplatte verbunden. Weiterhin umschließt die Deckelplatte einen Verdrängungsraum, welcher in einem Zuflussraum im Gegenpart angeordnet ist. Dieser Zuflussraum im Gegenpart ist beispielsweise die umlaufende Zuflussnut innerhalb des Zylinderkopfes. Die Umschließung des Verdrängungsraumes durch die Deckelplatte folgt im Wesentlichen der Kontur des Zuflussraumes, wodurch der Verdrängungsraum im verbundenen Zustand zwischen Flüssigkeitswechselfilter und Gegenpart innerhalb des Gegenparts angeordnet ist. Im Bereich der Umschließung des Gegenparts durch einen Teil der Deckelplatte ist dann auch die Zuflussöffnung in den Flüssigkeitswechselfilter angeordnet. Bevorzugt sind dabei mehrere Zuflussöffnungen umlaufend im Verdrängungsraum angeordnet. Alternativ oder zusätzlich dazu ist im Bereich der Abflussöffnung ein Rücklaufsperrventil angeordnet, wobei das Rücklaufsperrventil axial außerhalb der wirksamen Filterelementfläche angeordnet ist. Bevorzugt ist das Rücklaufsperrventil dabei so weit wie möglich am Ende der Abflussöffnung angeordnet. Durch die Verwirklichung des Verdrängungsraumes und / oder des Rücklaufsperrventils im Bereich der Abflussöffnung ergibt sich vorteilhaft, dass bei einem Wechsel des Flüssigkeitswechselfilters die Flüssigkeit im Wechselfilter verbleibt und nicht an die Umgebung abgegeben wird.

Gemäß einer vorteilhaften Ausgestaltung der Erfindung weist das Rücklaufsperrventil ein Federmittel zur Herstellung eines Presssitzes auf einer Dichtfläche auf, wobei das Federmittel druckbelastet ist. Das Federmittel übt also eine Druckkraft auf einen Ventilteller aus, welcher dadurch auf eine Dichtfläche gepresst wird und somit eine dichtende Verbindung herstellt. Das Federmittel kann hierbei beispielsweise eine Schraubenfeder oder ein kompressibles Medium sein, welches beim Dekomprimieren eine Druckkraft ausübt.

Alternativ hierzu kann das Federmittel zur Herstellung eines Presssitzes auf der Dichtfläche auch zugbelastet sein. Das Federmittel ist dabei korrespondierend mit einer vorgegebenen Kontur innerhalb des Flüssigkeitswechselfilters verbunden und zieht einen Ventilteller auf eine Dichtfläche, wodurch der dichte Presssitz erzielt wird. Das Federmittel kann hier beispielsweise wiederum eine Schraubfeder oder ein unter Unterdruck stehendes Medium sein, welches das Bestreben hat, sich zusammenzuziehen. In beiden Fällen ist durch die Wahl des Federmittels eine Einstellung der Ventilkennlinie möglich, so dass das Rücklaufsperrventil in Abhängigkeit der Druckverhältnisse zum Öffnen oder Schließen einstellbar ist.

Im Bereich des Verdrängungsraumes ist eine Rücklaufsperrmembran angeordnet, wobei die Rücklaufsperrmembran verhindert, dass die Flüssigkeit aus dem ausgebauten Flüssigkeitswechselfilter herauslaufen kann. Die Rücklaufsperrmembran ist hierbei bevorzugt aus einem Kunststoff oder Gummi gebildet und verschließt bei stehender Brennkraftmaschine den Flüssigkeitszulauf. Bei laufender Brennkraftmaschine gibt die Rücklaufsperrmembran den Flüssigkeitszulauf augrund ihrer Elastizität durch den am Zulauf herrschenden Öldruck frei.

Bevorzugt ist die Rücklaufsperrmembran hierbei unlösbar mit der Deckelplatte verbunden. Die Verbindung kann beispielsweise über Kleb- oder Schweißverfahren realisiert werden.

Gemäß einer weiteren Ausgestaltung der Erfindung weist die Deckelplatte am äußeren axialen Ende ein Dichtmittel zur Abdichtung der Verbindung zwischen Flüssigkeitswechselfilter und Gegenpart, insbesondere Zylinderkopf, auf. Bevorzugt ist dabei in der Deckelplatte eine umlaufende Nut angeordnet, welche beispielsweise einen O-Ring oder eine abgestochene Vierkantdichtung zur axialen Abdichtung der Verbindung aufnimmt. Gemäß einer vorteilhaften Ausgestaltung der Erfindung ist konzentrisch im Bereich der Abdeckplatte ein Mittel zur lösbaren Verbindung des Flüssigkeitswechselfilters mit einem Gegenpart angeordnet. Dabei erstreckt sich das Mittel zur Verbindung axial über die Kontur des Flüssigkeitswechselfilters hinaus. Dadurch wird das Anschlussstück zwischen Flüssigkeitswechselfilter und Gegenpart aus dem Flüssigkeitswechselfilter heraus in den Gegenpart hineinverlegt. So wird ein Gewindenippel, der im Stand der Technik zur Verbindung eines Standardflüssigkeitswechselfilters mit dem Zylinderkopf notwendig ist, überflüssig und auf diese Art und Weise kann einerseits ein teurer Gewindenippel eingespart werden und andererseits lässt sich so der Abflussdurchmesser um den Anteil des Gewindenippels vergrößern.

Es ist vorteilhaft, wenn das Mittel zur lösbaren Verbindung ein konzentrischer Ringkragen mit einem Außengewinde ist. Der konzentrische Ringkragen mit dem Außengewinde wird somit direkt in den Gegenpart, hier beispielsweise den Zylinderkopf, hineingeschraubt. In Kombination mit dem vorher angesprochenen Rücklaufsperrventil, welches nun im konzentrischen Ringkragen anzuordnen ist, ergibt sich der weitere große Vorteil, dass eine große Menge Flüssigkeit durch das Rücklaufsperrventil im Flüssigkeitswechselfilter zurückgehalten wird, die bei den bekannten Systemen beim Wechsel hinauslaufen würde.

Gemäß einer weiteren Ausgestaltung der Erfindung ist das Mittel zur lösbaren Verbindung einstückig aus der Abschlussplatte herausgebildet. Die bevorzugt aus Metall gebildete Abschlussplatte wird dabei bevorzugt in einem Tiefziehprozess hergestellt und weist weiterhin wenigstens eine Öffnung, die mit der wenigstens einen Zuflussöffnung korrespondiert, auf. Dabei kann die Öffnung die Zuflussöffnung selbst sein oder, im Falle der Anordnung des Verdrängungsraums in der Deckelplatte, fließt die Flüssigkeit durch die Zuflussöffnung in der Deckelplatte und dann weiterhin durch die Öffnung in der Abschlussplatte in das Innere des Flüssigkeitswechselfilters.

Alternativ hierzu kann das Mittel zur lösbaren Verbindung lösbar oder unlösbar dichtend mit der Abschlussplatte verbunden sein. Die Verbindung kann unter anderem über eine Kleb-, Schweiß- oder auch feste Schraubverbindung realisiert werden. Auch hier weist die Abschlussplatte weiterhin wenigstens eine Öffnung auf, die mit der wenigstens einen Zuflussöffnung korrespondiert.

Diese und weitere Merkmale von bevorzugten Weiterbildungen der Erfindung gehen außer aus den Ansprüchen auch aus der Beschreibung und der Zeichnung hervor.

### Zeichnung

Weitere Einzelheiten der Erfindung werden in der Zeichnung anhand von schematischen Ausführungsbeispielen beschrieben. Hierbei zeigt
- Figur 1: einen Halbschnitt durch ein erfindungsgemäßes Flüssigkeitswechselfilterelement und
- Figuren 2 - 7: Ausgestaltungen des mit dem Buchstaben Z bezeichneten Bereichs des Flüssigkeitswechselfilters aus Figur 1.

### Beschreibung der Ausführungsbeispiele

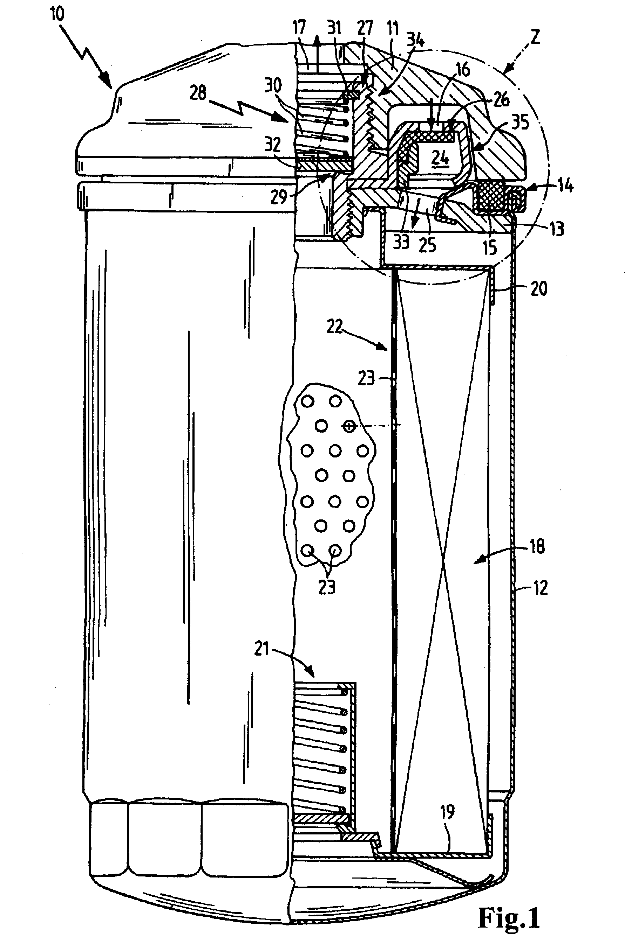

Die Figur 1 zeigt einen Flüssigkeitswechselfilter 10, welcher an einen Zylinderkopf 11 angeflanscht ist. Der Flüssigkeitswechselfilter 10 weist ein topfförmiges Gehäuse 12, bevorzugt aus Metall, es ist jedoch auch ein Gehäuse aus Kunststoff möglich, auf. Im Bereich der Verbindung zwischen Zylinderkopf 11 und Flüssigkeitswechselfilter 10 weist der Flüssigkeitswechselfilter 10 eine Abdeckplatte 13 auf, welche von einer Deckelplatte 14 gehalten wird. Das topfförmige Gehäuse 12 ist über eine Bördelung mit der Deckelplatte 14 verbunden und die Abdeckplatte 13 ist über eine Art Clinchen mit der Deckelplatte 14 verbunden. Zur Abdichtung der Verbindung zwischen Flüssigkeitswechselfilter 10 und Zylinderkopf 11 ist in der Deckelplatte 14 eine Vierkantdichtung 15 in eine Nut der Deckelplatte 14 eingelegt. Die Vierkantdichtung 15 dichtet den Flüssigkeitswechselfilter 10 axial gegenüber dem Zylinderkopf 11 ab. Weiterhin weist der Flüssigkeitswechselfilter 10 eine Zulauföffnung 16 und eine Ablauföffnung 17 auf, welche dichtend durch ein Filterelement 18 voneinander getrennt sind. Das Filterelement 18 ist bevorzugt ein hohlzylindrisches, zick-zack-förmig gefaltetes Filterelement und weist eine untere Endscheibe 19 und eine obere Endscheibe 20 auf. In die untere Endscheibe 19 ist ein Druckregulierventil 21 integriert. Das Druckregulierventil sorgt bei einer Verblockung oder Verstopfung des Filterelements 18 für eine Umgehung des Filterelements 18 und einen direkten Durchlass von der Roh- in die Reinseite. Dadurch ist es einfach möglich, Schäden von der Brennkraftmaschine abzuwenden. Im Inneren des Filterelements 18 ist ein Stützrohr 22 zur Stabilisierung des Filtermediums gegen Druckpulsation angeordnet, welches Öffnungen 23 aufweist. Mit der Abdeckplatte 13 und der Deckelplatte 14 ist weiterhin eine Volumenkontur 35 bevorzugt aus Metall verbunden, welche einerseits die Zulauföffnung 16 beinhaltet und sich andererseits in den Zylinderkopf 11 erstreckt. Dadurch wird ein Verdrängungsraum 24 gebildet. Die zu filtrierende Flüssigkeit, insbesondere das Schmieröl der Brennkraftmaschine, strömt durch eine hier nicht dargestellte Öffnung aus dem Zylinderkopf 11 und durchströmt anschließend die Zulauföffnung 16 in den Verdrängungsraum 24 und von dort über eine Durchlassöffnung 25 in den rohseitigen Raum des Flüssigkeitswechselfilters 10. Im Verdrängungsraum 24 ist eine Rücklaufsperrmembran 26 mittels eines Halters 33 befestigt. Die Rücklaufsperrmembran 26 ist dabei bevorzugt aus einem flexiblen, elastischen Kunststoff oder einem Gummimaterial gebildet und sorgt für ein Verschließen der Öffnung 16 im Stillstand der Brennkraftmaschine. Konzentrisch im Flüssigkeitswechselfilter 10 ist im Bereich der Verbindung zwischen Flüssigkeitswechselfilter 10 und Zylinderkopf 11 ein Verbindungskragen 27 angeordnet. Dieser ist fest mit der Abdeckplatte 13 und der Volumenkontur 35 verbunden, und weist in dem Bereich, welcher über den Flüssigkeitswechselfilter 10 hinausragt, ein Außengewinde zur Herstellung einer Gewindeverbindung 34 mit dem Zylinderkopf 11 auf. Im Inneren des Verbindungskragens 27 im Bereich der Verbindung mit dem Zylinderkopf 11 ist ein Rücklaufsperrventil 28 angeordnet. Das Rücklaufsperrventil 28 weist einen Ventilsitz 29, eine Druckfeder 30, welche über Halterungen 31 als Gegenlager gehalten werden, und einen Ventilteller 32 auf, wobei der Ventilteller 32 durch die Kraft der Druckfeder 30 zur Herstellung einer dichten Verbindung im stehenden Zustand der Brennkraftmaschine auf den Ventilsitz 29 gepresst wird. Das Rücklaufsperrventil 28 ist direkt in der Ablauföffnung 17 des Flüssigkeitswechselfilters 10 integriert und hat ebenfalls den Sinn, ein Leerlaufen des Filters bei stehender Brennkraftmaschine zu verhindern. Dadurch, dass das Rücklaufsperrventil 28 in der Ablauföffnung 17 und die Rücklaufsperrmembran 26 innerhalb des Verdrängungsraums 24 angeordnet sind, ergibt sich der Vorteil, dass bei einem stehend angeordneten Flüssigkeitswechselfilter 10 im Wartungs- und Demontagefall kein ÖI aus dem Flüssigkeitswechselfilter hinauslaufen kann und somit eine Verschmutzung der Umgebung und der Umwelt vermieden wird.

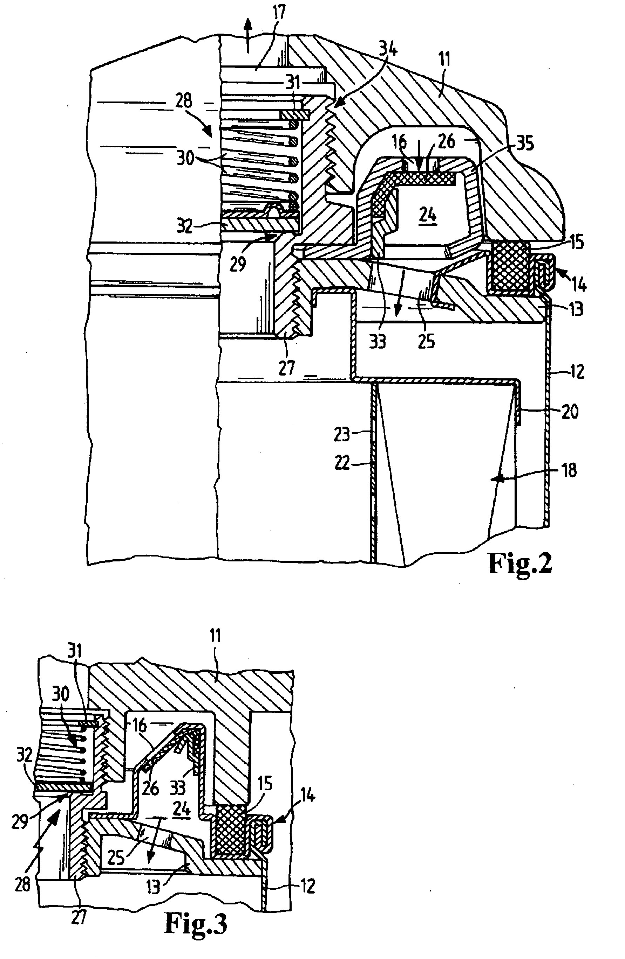

Die Figur 2 zeigt noch einmal eine Vergrößerung des in der Figur 1 als Bereich Z angegebenen Bereichs. Hier ist beispielsweise besser zu erkennen, wie die Druckfeder 30 über die Halterungen 31, welche mittels des Verbindungskragens 27 gebildet werden, als Gegenlager gehalten wird und dann den Ventilteller 32 auf den Ventilsitz 29 presst.

Die Figuren 3 bis 7 zeigen weitere Ausgestaltungen im Bereich Z der Figur 1, wobei gleiche Elemente mit den gleichen Bezugszeichen versehen sind.

Die Figur 3 zeigt eine Variante, in der die Zulauföffnung 16 nicht parallel zum Filterelement 18 gehalten ist, sondern ungefähr im Winkel von 45 ° dazu angeordnet ist. Die übrigen Elemente sind denen der Figuren 1 und 2 gleichzusetzen. Diese schräg gestellte Lösung der Zulauföffnung 16 hat den Vorteil, den Halter 33 der Rücklaufsperrmembran 26 als Klemmring ausführen zu können, oder sogar diesen alternativ an der Sperrmembran anzuspritzen. Desweiteren ergibt sich so ein Schutz der Rücklaufsperrmembran 26, wenn die durch den Zylinderkopf 11 einströmende Flüssigkeit nicht direkt auf die Rücklaufsperrmembran 26 trifft, sondern nur in einem Winkel.

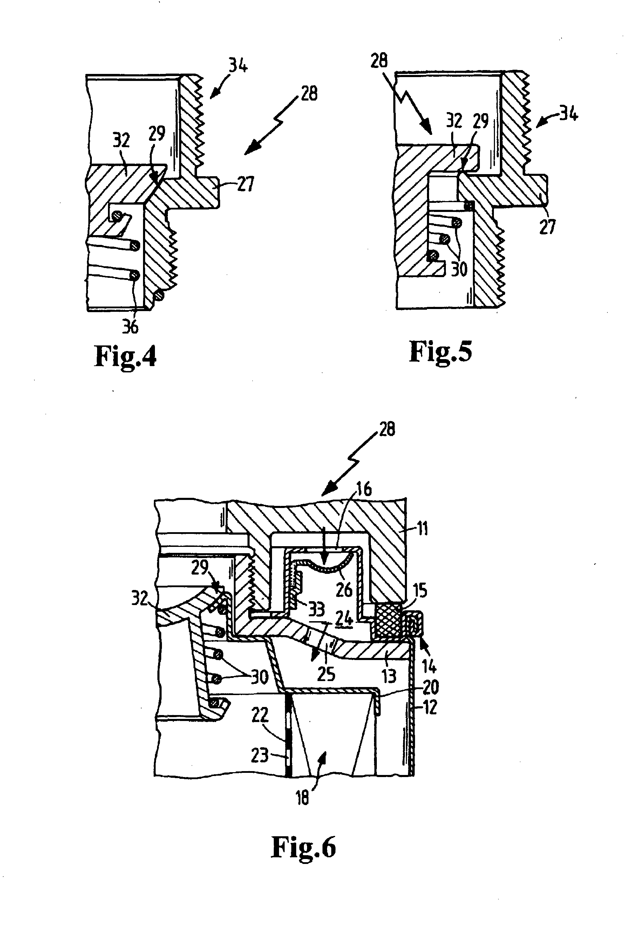

Die Figur 4 zeigt eine weitere Möglichkeit der Ausführung des Rücklaufsperrventils 28. Hier wird der Ventilteller 32 über eine Zugfeder 36 auf den Ventilsitz 29 gezogen. Der Ventilsitz 29 liegt wiederum im Verbindungskragen 27, wobei auch die Verankerung der Zugfeder durch den Verbindungskragen 27 realisiert wird.

Der Ventilsitz 32 der Figur 5 wird durch eine konische Druckfeder 30 auf den Ventilsitz 29 gepresst und gleichzeitig zentriert. Der Ventilsitz 29 ist wiederum durch den Verbindungskragen 27 realisiert.

In der Figur 6 bildet die Deckelplatte 14 den Verdrängungsraum 24. In der Deckelplatte 14 ist dann die Zulauföffnung 16 realisiert, wobei an der Deckelplatte 14 über die Halterung 33 wiederum eine Rücklaufsperrmembran 26 angeordnet ist. Die aus dem Zylinderkopf 11 kommende Flüssigkeit läuft also durch die Zulauföffnung 16 in den Verdrängungsraum 24 und von dort über die Durchlassöffnung 25 innerhalb der Abdeckplatte 13 in den rohseitigen Raum des Flüssigkeitswechselfilters 10. Das Gegenlager für die Druckfeder 30 des Rücklaufsperrventils 28 wird hier durch die obere Endscheibe 20 des Filterelementes 18 gebildet. Gleichzeitig bildet die Endscheibe 20 auch den Ventilsitz 29 für den Ventilteller 32.

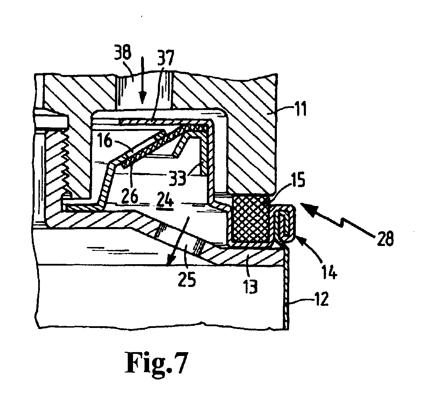

Zum Schutz der Rücklaufsperrmembran 26 kann gemäß Figur 7 auch ein Prallblech 37 mit aus der Deckelplatte 14 ausgeformt sein, welches die Rücklaufsperrmembran 26 über einen gewissen Bereich überdeckt, und dadurch einen direkten Kontakt der einströmenden Flüssigkeit mit der Rücklaufsperrmembran 26 verhindert. Hier ist zu erkennen, dass die Flüssigkeit durch eine Zuführöffnung 38 gebildet im Zylinderkopf 11 direkt auf die Rücklaufsperrmembran 26 auftreffen würde.

## Patentansprüche

1. Flüssigkeitswechselfilter, insbesondere für das Schmieröl einer Brennkraftmaschine, aufweisend ein im wesentlichen topfförmiges Gehäuse (12), mit einer konzentrisch angeordneten Abflussöffnung (17) für die gereinigte Flüssigkeit und wenigstens einer Zuflussöffnung (16) für die zu reinigende Flüssigkeit, einem dichtend zwischen Zuflussöffnung (16) und Abflussöffnung (17) angeordneten Filterelement (18), wobei das Gehäuse (12) mit einer Deckelplatte (14) verbunden ist und die Deckelplatte (14) mit einer Abdeckplatte (13) verbunden ist, **dadurch gekennzeichnet, dass** die Deckelplatte (14) einen Verdrängungsraum (24) zu einem Gegenpart des Flüssigkeitswechselfilters (10) hin begrenzend umschließt, welcher in einem Zuflussraum im Gegenpart angeordnet ist, derart, dass die Zuflussöffnung (16) in der Deckelplatte (14) im Bereich des Verdrängungsraumes (24) angeordnet ist, wobei im Bereich des Verdrängungsraumes (24) eine Rücklaufsperrmembran (26) angeordnet ist, derart, dass die Flüssigkeit aus dem vom Gegenpart ausgebauten Flüssigkeitswechselfilter (10) nicht herauslaufen kann.

2. Flüssigkeitswechselfilter, insbesondere für das Schmieröl einer Brennkraftmaschine, aufweisend ein im wesentlichen topfförmiges Gehäuse (12), mit einer konzentrisch angeordneten Abflussöffnung (17) für die gereinigte Flüssigkeit und wenigstens einer Zuflussöffnung (16) für die zu reinigenden Flüssigkeit, einem dichtend zwischen Zuflussöffnung (16) und Abflussöffnung (17) angeordneten Filterelement (18), wobei das Gehäuse (12) mit einer Deckelplatte (14) verbunden ist und die Deckelplatte (14) mit einer Abdeckplatte (13) verbunden ist, **dadurch gekennzeichnet, dass** mit der Abdeckplatte (13) und der Deckelplatte (14) eine Volumenkontur (35), bevorzugt aus Metal, verbunden ist, welche einerseits die Zulauföffnung (16) beinhaltet und sich andererseits in einen Zylinderkopf (11) erstreckt und somit einen Verdrängungsraum (24) bildet, wobei im Verdrängungsraum (24) eine Rücklaufsperrmembran (26) angeordnet ist, derart, dass die Flüssigkeit aus dem vom Zylinderkopf (11) ausgebauten Flüssigkeitswechselfilter(10) nicht herauslaufen kann.

3. Flüssigkeitswechselfilter nach Anspruch 1, **dadurch gekennzeichnet, dass** die Rücklaufsperrmembran (26) unlösbar mit der Deckelplatte (14) verbunden ist.

4. Flüssigkeitswechselfilter nach einem der Ansprüche 1 oder 3, **dadurch gekennzeichnet, dass** die Deckelplatte (14) am äußeren axialen Ende ein Dichtmittel (15) zur Abdichtung der Verbindung zwischen Flüssigkeitswechselfilter (10) und Gegenpart (11) aufweist.

5. Flüssigkeitswechselfilter nach einem der Ansprüche 1, 3 oder 4, **dadurch gekennzeichnet, dass** konzentrisch im Bereich der Abdeckplatte (13) ein Mittel zur lösbaren Verbindung des Flüssigkeitswechselfilters (10) mit einem Gegenpart (11) angeordnet ist, wobei sich das Mittel zur Verbindung axial über die Kontur des Flüssigkeitswechselfilters (10) hinaus erstreckt.

6. Flüssigkeitswechselfilter nach Anspruch 5, **dadurch gekennzeichnet, dass** das Mittel zur lösbaren Verbindung ein konzentrischer Ringkragen (27) mit einem Außengewinde ist.

7. Flüssigkeitswechselfilter nach einem der Ansprüche 5 bis 6, **dadurch gekennzeichnet, dass** das Mittel zur lösbaren Verbindung einstückig aus der Abdeckplatte (13) gebildet ist, wobei die Abdeckplatte (13) weiterhin wenigstens eine Öffnung (25), die mit der wenigstens einen Zuflussöffnung (16) korrespondiert, aufweist.

8. Flüssigkeitswechselfilter nach einem der Ansprüche 5 bis 6, **dadurch gekennzeichnet, dass** das Mittel zur lösbaren Verbindung (27) lösbar oder unlösbar dichtend mit der Abdeckplatte (13) verbunden ist, wobei die Abdeckplatte (13) weiterhin wenigstens eine Öffnung (25), die mit der wenigstens einen Zuflussöffnung (16) korrespondiert, aufweist.

## Claims

1. Replaceable liquid filter, in particular for the lubricating oil of an internal combustion engine, featuring an essentially pot-shaped housing (12), with a concentrically disposed outflow opening (17) for the cleaned liquid and at least one inflow opening (16) for the liquid to be cleaned, a filter element (18) sealingly disposed between inflow opening (16) and outflow opening (17), the housing (12) being connected with a top cover plate (14) and the top cover plate (14) being connected with a cover plate (13), **characterized in that** the top cover plate (14) encloses a displacement space (24) by limiting it in relation to a counterpart of the replaceable liquid filter (10), which is disposed in an inflow space in the counterpart in such a way that the inflow opening (16) in the top cover plate (14) is disposed in the area of the displacement space (24), an anti-drain membrane (26) being disposed in the area of the displacement space (24) in such a way that the liquid can not flow out of the replaceable liquid filter (10) removed from the counterpart.

2. Replaceable liquid filter, in particular for the lubricating oil of an internal combustion engine, featuring an essentially pot-shaped housing (12), with a concentrically disposed outflow opening (17) for the cleaned liquid and at least one inflow opening (16) for the liquid to be cleaned, a filter element (18) sealingly disposed between inflow opening (16) and outflow opening (17), the housing (12) being connected with a top cover plate (14) and the top cover plate (14) being connected with a cover plate (13), **characterized in that** a volume contour (35), preferably made of metal, which, on the one hand, contains the inflow opening (16) and, on the other hand, extends into a cylinder head (11) and therefore forms a displacement space (24), is connected with the cover plate (13) and the top cover plate (14), in the displacement space (24) being disposed an anti-drain membrane (26) in such a way that the liquid can not flow out of the cylinder head (11) which is removed from the replaceable liquid filter (10).

3. Replaceable liquid filter according to claim 1, **characterized in that** the anti-drain membrane (26) is connected undetachably with the top cover plate (14).

4. Replaceable liquid filter according to one of the claims 1 or 3, **characterized in that** the top cover plate (14) features a sealant (15) at the axial extremity for sealing the connection between replaceable liquid filter (10) and counterpart (11).

5. Replaceable liquid filter according to one of the claims 1, 3 or 4, **characterized in that** a means for a detachable connection of the replaceable liquid filter (10) with a counterpart (11) is disposed concentrically in the area of the cover plate (13), the means for the connection extending axially beyond the contour of the replaceable liquid filter (10).

6. Replaceable liquid filter according to claim 5, **characterized in that** the means for the detachable connection is a concentric annular collar (27) with an external thread.

7. Replaceable liquid filter according to one of the claims 5 to 6, **characterized in that** the means for the detachable connection is made as one piece with the cover plate (13), the cover plate (13) featuring furthermore at least one opening (25) which corresponds with the at least one inflow opening (16).

8. Replaceable liquid filter according to one of the claims 5 to 6, **characterized in that** means for the detachable connection (27) is sealingly connected detachably or undetachably with the cover plate (13), the cover plate (13) featuring furthermore at least one opening (25) which corresponds with the at least one inflow opening (16).

## Revendications

1. Filtre à liquide échangeable, notamment pour l'huile de lubrification d'un moteur à combustion interne, présentant essentiellement un boîtier (12) en forme de pot, avec une ouverture de sortie (17) pour le liquide nettoyé disposée de manière concentrique et au moins une ouverture d'entrée (16) pour le liquide à nettoyer, un élément filtrant (18) disposé de façon étanche entre l'ouverture d'entrée (16) et l'ouverture de sortie (17), le boîtier (12) étant relié à une plaque-couvercle (14) et la plaque-couvercle (14) étant reliée à une plaque de recouvrement (13), **caractérisé en ce que** la plaque-couvercle (14) encercle une zone de refoulement (24), délimitant cette zone par rapport à une contrepartie du filtre à liquide échangeable (10 qui est placée dans une zone d'entrée dans la contrepartie de sorte que l'ouverture d'entrée (16) soit positionnée dans la plaque-couvercle (14) à proximité de la zone de refoulement (24), une membrane anti-retour (26) étant disposée à proximité de la zone de refoulement (24) de manière à ce que le liquide ne puisse pas s'écouler du filtre à liquide échangeable (10) démonté de la contrepartie.

2. Filtre à liquide échangeable, notamment pour l'huile de lubrification d'un moteur à combustion interne, présentant essentiellement un boîtier (12) en forme de pot, avec une ouverture de sortie (17) pour le liquide nettoyé disposée de manière concentrique et au moins une ouverture d'entrée (16) pour le liquide à nettoyer, un élément filtrant (18) disposé de façon étanche entre l'ouverture d'entrée (16) et l'ouverture de sortie (17), le boîtier (12) étant relié à une plaque-couvercle (14) et la plaque-couvercle (14) étant reliée à une plaque de recouvrement (13), **caractérisé en ce qu'**un contour de volume (35), de préférence en métal, est relié à la plaque de recouvrement (13) et la plaque-couvercle (14), ce contour comprenant d'une part l'ouverture d'entrée (16) et s'étendant d'autre part dans une culasse de cylindre (11), formant ainsi une zone de refoulement (24), une membrane anti-retour (26) étant disposée dans la zone de refoulement (24) de sorte que le liquide ne puisse pas s'écouler du filtre à liquide échangeable (10) démonté de la culasse de cylindre (11).

3. Filtre à liquide échangeable selon la revendication 1, **caractérisé en ce que** la membrane anti-retour (26) est reliée de façon inamovible avec la plaque-couvercle (14).

4. Filtre à liquide échangeable selon l'une des revendications 1 ou 3, **caractérisé en ce que** la plaque-couvercle (14) présente sur l'extrémité axiale un agent d'étanchéité (15) servant à étancher la liaison entre le filtre à liquide échangeable (10) et la contrepartie (11).

5. Filtre à liquide échangeable selon l'une des revendications 1, 3 ou 4, **caractérisé en ce qu'**un moyen de liaison amovible du filtre à liquide échangeable (10) avec une contrepartie (11) est disposé de manière concentrique à proximité de la plaque de recouvrement (13), ce moyen de liaison s'étendant en sens axial au-delà du contour du filtre à liquide échangeable (10).

6. Filtre à liquide échangeable selon la revendication 5, **caractérisé en ce que** le moyen de liaison amovible est une collerette annulaire (27) concentrique pourvue d'un filet extérieur.

7. Filtre à liquide échangeable selon l'une des revendications 5 à 6, **caractérisé en ce que** le moyen de liaison amovible est constitué en un seul bloc d'une plaque de recouvrement (13), la plaque de recouvrement (13) présentant par ailleurs au moins une ouverture (25) qui correspond avec au moins une ouverture d'entrée (16).

8. Filtre à liquide échangeable selon l'une des revendications 5 à 6, **caractérisé en ce que** le moyen de liaison amovible (27) est relié de façon amovible ou inamovible et de manière étanche à la plaque de recouvrement (13), la plaque de recouvrement (13) présentant par ailleurs au moins une ouverture (25) qui correspond avec au moins une ouverture d'entrée (16).
